# EUROPEAN PATENT APPLICATION

(11) **EP 2 475 042 A1**
(43) Date of publication of application: **11.07.2012**
(21) Application number: 10808163.9
(22) Date of filing: 05.08.2010
(51) Int. Cl.: H01M 10/058, H01M 4/134, H01M 4/1395, H01M 10/052

(54) **PROCESS FOR PRODUCTION OF THIN FILM LITHIUM SECONDARY BATTERY**

(30) Priority: 10.08.2009 JP 2009186161
(71) Applicant: Ulvac, Inc., Chigasaki-shi Kanagawa 253-8543 (JP)
(72) Inventor: HIDA, Masanori, Chigasaki-shi Kanagawa 253-8543 (JP); ODAGI, Hideyuki, Chigasaki-shi Kanagawa 253-8543 (JP); SHIMADA, Tetsuya, Chigasaki-shi Kanagawa 253-8543 (JP); AODAI, Makoto, Tsukuba-shi Ibaraki 300-2635 (JP); KURAUCHI Toshiharu, Tsukuba-shi Ibaraki 300-2635 (JP)
(74) Representative: Körber, Martin Hans
(86) International application number: PCT/JP2010/063314
(87) International publication number: WO 2011/018980

(57) **Abstract**

A technique for producing a thin film lithium secondary battery is provided, which does not change the properties of a metallic lithium film as a negative electrode. A process for producing a chargeable-and-dischargeable thin film lithium secondary battery, which includes a substrate 70, a positive electrode film 92 arranged on the substrate 70 and formed in a structure of which lithium is insertable and releasable, an electrolyte film 93 which is arranged on the positive electrode film 92 and being in contact with the positive electrode film 92 and contains lithium ions and in which lithium ions are movable, and a negative electrode film 95 made of metallic lithium and arranged on the electrolyte film 93 and in contact with the electrolyte film 93. After the negative electrode film 95 is formed, a lithium carbonate film 97 is formed on a surface of the negative electrode film 95 by bringing a surface of the negative electrode film 95 into contact with a surface-treating gas containing a rare gas and carbon dioxide.

## Description

### TECHNICAL FIELD

The present invention generally relates to a process for producing a thin film lithium secondary battery. More particularly, the invention relates to a technique to cause no change in the properties of a metallic lithium film as a negative electrode.

### BACKGROUND ART

In steps for producing the thin film lithium secondary battery, after a lithium thin film as a negative electrode is vapor deposited on an object to be processed inside a vapor deposition chamber, it is transferred into a film forming chamber where a protective film is formed on the lithium thin film of the object to be processed.

In conventional techniques, when an object to be processed is to be carried from the vapor deposition chamber into the film forming chamber, it is carried into a transfer device from the vapor deposition chamber, the transfer device is carried in dried air up to a film forming apparatus, and the object to be processed is carried into the film forming apparatus from the transfer device. When the object to be processed is transferred in the dried air, the properties of a surface of the object to be processed are changed.

To cope with such problem, there is a trial that in order to prevent a reaction between moisture in the atmosphere and the lithium thin film during transference of the transfer device, an inert gas (such as, argon) is introduced into the transfer device, and the surface of the object to be processed is exposed to the argon gas and the properties thereof is not changed.

However, residual gases (such as, oxygen or the like) and moisture are contained as impurities in a commercially available argon gas, so that lithium is converted to lithium hydroxide or lithium oxide through a reaction between the moisture in the argon gas and lithium in the surface of the obj ect to be processed; and consequently the properties of the lithium thin film change.

### PRIOR ART DOCUMENT

### PATENT DOCUMENT

Patent Document 1: JPA2004-185810

### SUMMARY OF THE INVENTION

### PROBLEM TO BE SOLVED BY THE INVENTION

The present invention, which has been made to solve the problems of the above conventional technique, is to provide a process for producing a thin film lithium secondary battery, without changing the properties of a metallic lithium film as a negative electrode.

### MEASURES TO SOLVE THE PROBLEM

In order to solve the above problem, the present invention is directed to a process for producing a chargeable-and-dischargeable thin film lithium secondary battery, which includes a substrate, a positive electrode film arranged on the substrate and formed in a structure of which lithium is insertable and releasable, an electrolyte film which is arranged on the positive electrode film and is in contact with the positive electrode film, and contains lithium ions and in which lithium ions are movable, and a negative electrode film made of metallic lithium and arranged on the electrolyte film and being in contact with the electrolyte film, and the process is such that after the negative electrode film is formed, a film of lithium carbonate is formed on a surface of the negative electrode film by bringing a surface of the negative electrode film into contact with a surface-treating gas containing a diluent gas not reactable with metallic lithium and carbon dioxide without exposing the negative electrode film to the atmosphere.

Further, the present invention is directed to the process for producing the thin film lithium secondary battery, wherein after the film of lithium carbonate is formed, the substrate is placed in a carrier box which is filled with either one of the diluent gas and the surface-treating gas; and the carrier box in this state is moved in the atmosphere.

The present invention is directed to the process for producing the thin film lithium secondary battery, wherein after the film of lithium carbonate is formed, a protective film is formed on the film of lithium carbonate.

The present invention is directed to the process for producing the thin film lithium secondary battery, wherein the carbon dioxide is contained in the surface-treating gas at a partial pressure of at least 0.01% and at most 4%.

The present invention is directed to a chargeable-and-dischargeable thin film lithium secondary battery, which includes a substrate, a positive electrode film arranged on the substrate and formed in a structure into which lithium is insertable and from which lithium is releasable, an electrolyte film which is arranged on the positive electrode film and in contact with the positive electrode film and contains lithium ions and in which lithium ions are migratable, and a negative electrode film made of metallic lithium and arranged on the electrolyte film and in contact with the electrolyte film, wherein a film of lithium carbonate is arranged on the negative electrode film and in contact with the negative electrode film.

Furthermore, the present invention is directed to the thin film lithium secondary battery, wherein the film of lithium carbonate is formed on a surface and a lateral face of the negative electrode film.

### EFFECT OF THE INVENTION

According to the present invention, the thin film lithium secondary battery can be produced without changing the properties of the metallic lithium film as the negative electrode.

### BRIEF DESCRIPTION OF THE DRAWINGS

Fig. 1(a) is a plan view of a thin film lithium secondary battery; and Fig. 1(b) is a sectional view of the thin film lithium secondary battery cut along a A-A' line shown in Fig. 1(a).
Fig. 2(a) is a plan view of an object to be processed in which an electrolyte film is formed on its surface; and Fig. 2(b) is a sectional view of the object to be processed cut along a B-B' line shown in Fig. 2(a), in which the electrolyte film is formed on the surface of the object to be processed.
Fig. 3 shows a vapor deposition apparatus to be used in the present invention.
Fig. 4(a) is a plan view of the object to be processed in which a negative electrode film is formed on its surface; and Fig. 4(b) is a sectional view cut along a C-C' line shown in Fig. 4(a), of the object to be processed in which the negative electrode film is formed on the surface of the object to be processed.
Fig. 5 shows a film-forming apparatus to be used in the present invention.
Fig. 6(a) is a plan view of the object to be processed in which a film of lithium carbonate film is formed on its surface; and Fig. 6(b) is a sectional view of the object to be processed cut along a D-D' line, shown in Fig. 6(a), in which the film of lithium carbonate is formed on the surface of the object to be processed.

### EXPLANATION OF REFERENCE NUMERALS

- 70: substrate
- 71, 80, 81: object to be processed
- 91: positive pole electrical power collector film
- 92: positive electrode film
- 93: electrolyte film
- 94: negative pole electrical power collector film
- 95: negative electrode film
- 96: protective film
- 97: lithium carbonate film

### EMBODIMENTS FOR CARRYING OUT THE INVENTION

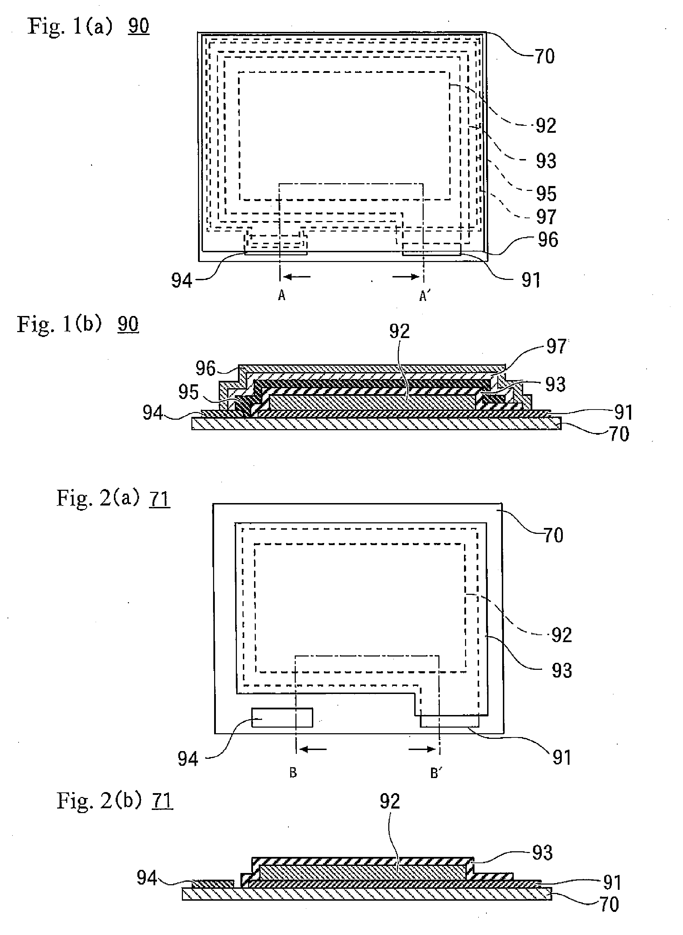

In Fig. 1(a), a reference numeral 90 generally illustrates a thin film lithium secondary battery shown in plan view, which is obtained by the production process of the present invention; and Fig. 1(b) is the thin film lithium secondary battery, generally designated by reference numeral 90 and illustrated as a sectional view cut along with a line A-A' shown in Fig. 1(a).

The thin film lithium secondary battery 90 includes a substrate 70, a positive pole electrical power collector film 91, a negative pole electrical power collector film 94, a positive electrode film 92, a negative electrode film 95, an electrolyte film 93, and a protective film 96.

The positive pole electrical power collector film 91 and the negative pole electrical power collector film 94 are arranged at places spaced on a surface of the substrate 70.

The positive electrode film 92 is arranged on a surface of the positive pole electrical power collector film 91; and the electrolyte film 93 is arranged on a surface of the positive electrode film 92.

The negative electrode film 95 is arranged on a surface of the electrolyte film 93; and the negative electrode film 95 is in contact and electrically connected to the negative pole electrical power collector film 94 in a state such that the negative electrode film 95 is insulated from the positive electrode film 92.

The negative electrode film 95 has a lithium carbonate film 97; and the lithium carbonate film 97 is formed on a surface and lateral faces of the negative electrode film 95.

The negative electrode film 95 is a metallic lithium film, and the lithium carbonate film 97 does not change the properties of the metallic lithium film to be discussed later.

The protective film 96 is arranged on the lithium carbonate film 97 so that moisture is prevented from invading the layers under the protective film 96.

Each of the positive pole electrical power collector film 91 and the negative pole electrical power collector film 94 are either one of an Al film, a Ti film and a Pt film in this specification; and the positive pole electrical power collector film 91 and the negative pole electrical power collector film 94 have only to be electrically conducting films.

The electrolyte film 93 is an LiPON film, but may be a polymer film or a film of an inorganic compound, which includes lithium ions and has a structure for allowing the lithium ions to move. Here, the protective film 96 is a resin film.

The positive electrode film 92 includes lithium, and is, for example, an LiCo0₂ film, an LiNiO₂ film, an LiMn₂O₄ film or the like. The positive electrode film 92 is the LiCoO₂ film, but it may be a film having a structure, which allows the insertion of lithium and the release of the inserted lithium.

When the thin film lithium secondary battery 90 is to be charged, the negative pole electrical power collector film 94 and the positive pole electrical power collector film 91 are connected to an electric power source; and a negative voltage is applied to the negative pole electrical power collector film 94; and a positive voltage is applied to the positive pole electrical power collector film 91. Consequently, lithium in the positive electrode film 92 is released from the inside of the positive electrode film 92, and moved into the electrolyte film 93 in the form of lithium ions, so that the amount of the lithium inside the positive electrode film 92 decreases, and the lithium ions in the electrolyte film 93 are converted to lithium and deposited on the negative electrode film 95; then, a film of metallic lithium is formed on the negative electrode film 95.

When the charged thin film lithium secondary battery 90 is to be discharged, the negative pole electrical power collector film 94 and the positive pole electrical power collector film 91 are connected via a conductive wire through a load in a state such that there is a potential difference between the negative pole electrical power collector film 94 and the positive pole electrical power collector film 91 so that the metallic lithium of the negative electrode film 95 is converted to lithium ions, which are dissolved into the electrolyte film 93, while lithium ions in the electrolyte film 93 are inserted into the positive electrode film 92 in the form of lithium; and consequently, electric current flows from the positive pole electrical power collector film 91 to the negative pole electrical power collector film 94 via the load.

As discussed above, the thin film lithium secondary battery 90 can perform charging and discharging.

In the following detailed description, the formation of the negative electrode film 92 and the protective films 96 of the thin film lithium secondary battery 90 will be explained.

In Fig. 2(a), a reference numeral 71 is a plan view of an object to be processed in a state whereby the electrolyte film 93 has been arranged on the surface of the positive electrode film 92, and the positive pole electrical power collector film 91 and the negative pole electrical power collector film 94 are arranged at places spaced on the surface of the substrate 70. The positive electrode film 92 and the electrolyte film 93 are formed on the surface of the positive pole electrical power collector film 91 in this order such that a part of the positive pole electrical power collector film 91 and the surface of the negative pole electrical power collector film 94 are exposed. In such a state, the surface of the electrolyte film 93 is also exposed.

In Fig. 2(b), reference numeral 71 generally illustrates the object to be processed 71 shown in sectional view cut along a B-B' line shown in Fig. 2(a).

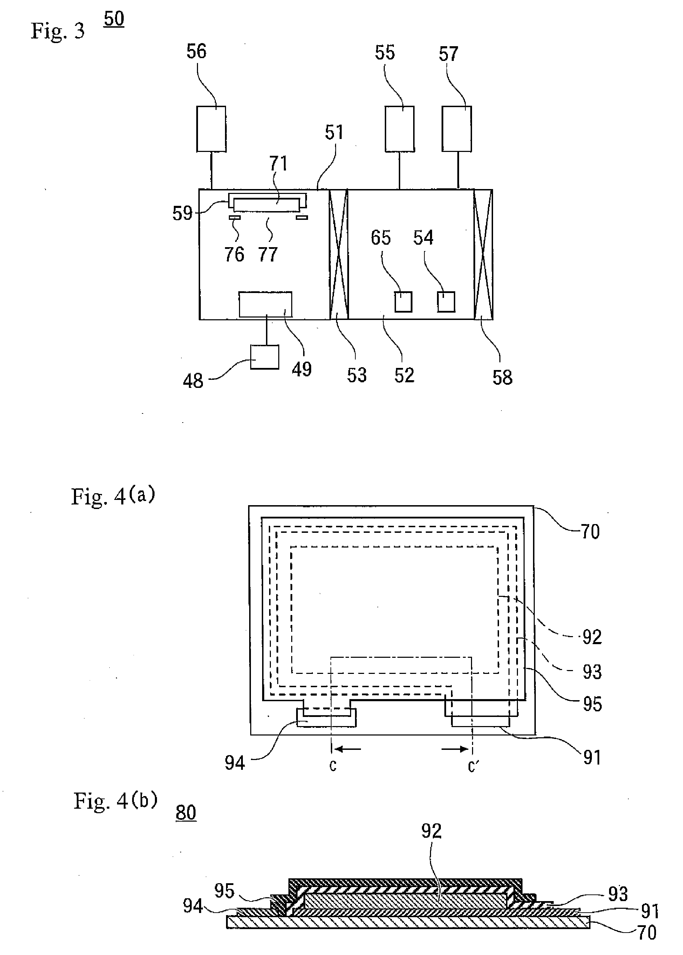

In Fig. 3, reference numeral 50 is a vapor deposition apparatus to be used in the present invention. The vapor deposition apparatus 50 includes a first vacuum chamber 51 and a loading/unloading chamber 52.

The first vacuum chamber 51 and the loading/unloading chamber 52 are connected via a gate valve 53. Here, a transfer device 54 is arranged inside the loading/unloading chamber 52, and the object to be processed is mounted on the transfer device 54. When the gate valve 53 between the loading/unloading chamber 52 and the first vacuum chamber 51 is opened, the object to be processed can be carried from the loading/unloading chamber 52 into the first vacuum chamber 51, and carried out therefrom.

Vacuum evacuating devices 55, 56 are connected to the loading/unloading chamber 52 and the first vacuum chamber 51; and when the vacuum evacuating devices 55, 56 are operated, the inside of each of the loading/unloading chamber 52 and the first vacuum chamber 51 can be set to a vacuum ambience. A gas introducing device 57 is connected to the loading/unloading chamber 52. The gas introducing device 57 includes a cylinder (not shown) in which a surface-treating gas is stored; and the surface-treating gas can be introduced into the loading/unloading chamber 52. Here, the surface-treating gas is a mixed gas of an argon gas and carbon dioxide.

A substrate holder 59 is arranged at a ceiling inside the first vacuum chamber 51; and a vapor deposition source 49 in which metallic lithium is arranged is placed on a bottom face. The vacuum deposition source 49 is provided with a heater 48. When the inside of first vacuum chamber 51 is set to the vacuum ambience and the vapor deposition source 49 is heated inside the first vacuum chamber 51 by turning on the power source of the heater 48, a vapor of the metallic lithium is discharged from the vapor deposition source 49.

The gate valve 53 between the loading/unloading chamber 52 and the first vacuum chamber 51 is closed, the vacuum evacuating device 56 connected to the first vacuum chamber 51 is operated, and the inside of the first vacuum chamber 51 is vacuum evacuated.

An inlet door 58 provided in the loading/unloading chamber 52 is opened; the object to be processed 71 is carried into the loading/unloading chamber 52 from the atmosphere or a dried atmosphere; and the inlet door 58 is closed.

After the vacuum evacuating device 55 connected to the loading/unloading chamber 52 is operated and a vacuum ambience is formed by vacuum evacuating the loading/unloading chamber 52, the gate valve 53 between the loading/unloading chamber 52 and the first vacuum chamber 51 is opened, and the object to be processed 71 is carried into the first vacuum chamber 51 from the loading/unloading chamber 52 in such a state where the vacuum ambience is maintained.

The object to be processed 71 is held by the substrate holder 59 in a state such that the face where the electrolyte film 93 and the negative pole electrical power collector film 94 are arranged is directed to the vapor deposition source 49.

A mask 76 having an opening 77 is arranged at a surface of the object to be processed 71 inside the vacuum chamber 51, so that the periphery of the object to be processed 71 is covered, and the surface of the electrolyte film 93 of the object to be processed 71, a Vicinity area thereof and a part of the negative pole electrical power collector film 94 are exposed to a bottom face of the opening 77. In this state, when the metallic lithium inside the vacuum source 49 is evaporated and a vapor of the metallic lithium is discharged into the vacuum chamber 51, the vapor reaches the surface of the object to be processed 71 through the opening 77 of the mask 76, so that a negative electrode film 95 made of a film of the metallic lithium is formed, the negative electrode film 95 covering the surface and the lateral face of the electrolyte film 93.

The electrolyte film 93 is arranged between the negative electrode film 95 and the positive electrode film 92; and the negative electrode film 95 and the positive electrode film 92 are not in contact with each other, but are insulated.

Moreover, the negative electrode film 95 is also formed on the exposed surface of the negative pole electrical power collecting film 94; the negative electrode film 95 is in contact with the negative pole electrical power collecting film 94; and this portion of the negative electrode film 95 is connected to the negative electrode film 95 on the electrolyte film 93. Therefore, the portion of the negative electrode film 95, which is on the electrolyte film 93, is electrically connected to the negative pole electrical power collector film 94.

After the negative electrode film 95 made of the metallic lithium film having a predetermined film thickness is formed, the heating of the vapor deposition source 49 is stopped to terminate the vapor deposition.

The object to be processed 71 shown in Figs. 2(a) and 2(b) is converted to the object to be processed 80 shown in Figs. 4(a) and 4(b) through the formation of the negative electrode film 95 on the surface of the electrolyte film 93. Fig. 4(a) is a plan view of the object to be processed 80; and Fig. 4(b) is a sectional view of the object to be processed 80 cut along a C-C' line shown in Fig. 4(a).

The inside of the loading/unloading chamber 52 has been vacuum evacuated by the vacuum evacuating device 55; and the vacuum ambience is formed therein. After the gate valve 53 between the loading/unloading chamber 52 and the first vacuum chamber 51 is opened, the object to be processed 71 is carried into the loading/unloading chamber 52 and the gate valve 53 between the loading/unloading chamber 52 and the first vacuum chamber 51 is closed, the vacuum evacuation of the loading/unloading chamber 52 is stopped, the surface-treating gas is introduced into the loading/unloading chamber 52 in the vacuum ambience by operating the gas introduction device 55 connected to the loading/unloading chamber 52. The surface-treating gas is introduced until the pressure inside the loading/unloading chamber 52 reaches the atmospheric pressure.

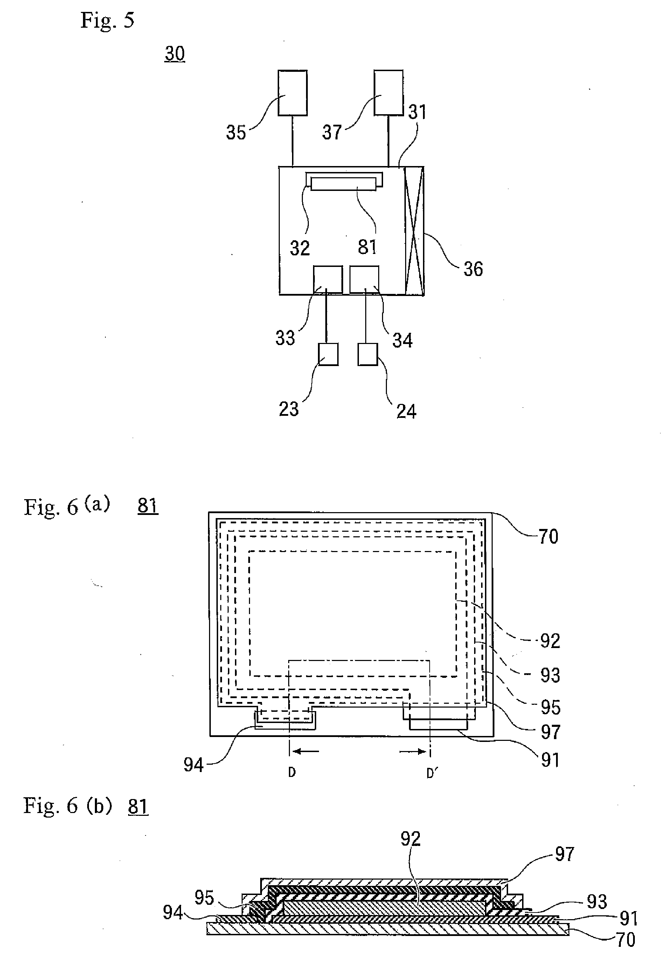

The exposed surface of the negative electrode film 95 of the object to be processed 80 is in contact with the surface-treating gas without being in contact with the atmosphere containing moisture; and the metallic lithium located at the exposed surface of the negative electrode film 95 reacts with carbon dioxide in the surface-treating gas, so that lithium carbonate is produced to form the lithium carbonate film 97 on the surface and the lateral face of the negative electrode film 95 made of the metallic lithium film (Fig. 6). In such a state, the surface of the lithium carbonate film 97 is exposed.

Since the lithium carbonate film 97 does not allow the penetration of moisture or oxygen, the moisture or oxygen does not reach the negative electrode film 95 under the lithium carbonate film 97.

Carbon dioxide is contained in the surface-treating gas at a content corresponding to 0.01% or more to 4% or less of a total pressure, assuming that the total pressure is the pressure of the treating gas.

After the lithium carbonate film 97 is formed, the object to be processed 81 is carried into a glovebox filled with an argon gas containing no moisture, without being exposed to the atmosphere, and taken out by opening the door 58.

Although the lithium carbonate film 97 is formed inside the loading/unloading chamber 52, the object to be processed 80 can also be formed with the negative electrode film 95 being carried into the glovebox filled with the treating gas, without being exposed to the atmosphere; and the lithium carbonate film 97 may be formed inside the glovebox.

As explained above, according to the present invention, since the lithium carbonate film 97 is formed on the surface of the negative electrode film 95 made of the metallic lithium film, the moisture gas does not penetrate into the metallic lithium film under the lithium carbonate film 97. Since no hydroxide film is formed in the metallic lithium film, the properties of the metallic lithium film do not change.

Although the metallic lithium film causes a color change reaction through a composite reaction of oxidation and hydroxylation, no composite reaction takes place and thus no color change occurs in the metallic lithium film even through it is in contact with a very small amount of oxygen gas or the moisture gas after the lithium carbonate film 97 is provided.

Meanwhile, no moisture is contained in the above surface-treating gas. Even if moisture is contained in the surface-treating gas, metallic lithium is more likely to become a carbonate than a hydroxide and an oxide, so that the lithium carbonate film 97 is formed before the hydroxide film is formed on the surface of the metallic lithium film. Therefore, even if gaseous water is contained in the surface-treating gas, the properties of the metallic lithium film are not changed with the contained moisture.

Although the surface-treating gas is a mixed gas of the argon gas and carbon dioxide, a mixed gas of a rare gas other than argon and carbon dioxide may be used. On the other hand, a mixed gas of an N₂ gas and carbon dioxide may also be used. In summary, a surface-treating gas containing a diluent gas that does not react with metallic lithium (such as, a gas containing either one or both of the rare gas and the N₂ gas) and carbon dioxide gas can be used. The formed metallic lithium film is brought into contact with the surface-treating gas, before the formation of lithium hydroxide and lithium oxide, without being exposed to the atmosphere.

A carrier box 65 is arranged inside the glovebox; the obj ect to be processed 81 formed with the lithium carbonate film 97 is placed inside the carrier box 65 filled with the above diluent gas or the above surface-treating gas; the carrier box 65 is gas-tightly sealed; and the object to be processed is carried out from the glovebox and carried into the film forming apparatus in a state such that no atmosphere enters inside the carrier box 65. When the vacuum ambience is formed in the loading/unloading chamber 52, the object to be processed 81 is placed in the carrier box 65 inside the loading/unloading chamber 52; and then, the surface-treating gas is introduced into the loading/unloading chamber 52 and a lithium carbonate film 97 is formed on the surface of the object to be processed 81 inside the carrier box 65.

In Fig. 3, a reference numeral 30 is a film forming apparatus, and the film forming apparatus 30 includes a second vacuum chamber 31. A vacuum evacuating device 35 is connected to the second vacuum chamber 31; and when the vacuum evacuating device 35 is operated, a vacuum ambience can be formed inside the second vacuum chamber 31 though vacuum evacuation. A substrate holder 32 is arranged at a ceiling of the second vacuum chamber 31, and first and second vessels 33, 34 are arranged at a bottom portion of the second vacuum chamber 31.

The first and second vessels 33, 34 are provided with first and second heaters 23, 24, respectively. Two kinds of chemical compounds capable of reacting with each other are placed in the first and second vessels 33, 34 one by one, respectively. When the chemical compounds in the first and second vessels 33, 34 are heated by turning on the powers of the first and second heaters 23, 24, vapors of the chemical compounds can be produced.

The object to be processed 81 formed with the lithium carbonate film 97 is carried into the second vacuum chamber 31 from an inlet door 36 via a glovebox (not shown) and a carry-in chamber (not shown), without being exposed to the atmosphere.

The inside of the second vacuum chamber 31 is made to the vacuum ambience by the vacuum evacuating device 35; and the object to be processed 81 is held by a substrate holder 32 in such a manner that an exposed surface of the lithium carbonate film 99 of the object to be processed 81 is opposed to the first and second vessels 33, 34.

Here, a diamine compound (such as, 1, 12-diaminododecane) is placed in the first vessel 33; an isocyanate compound (such as, 1, 3-bis (methyl isocyanate) cyclohexane) is placed in the second vessel 34; their respective vapors are generated; and a protective film 96 made of a polyurea film is formed on the exposed surface of the lithium carbonate film 97 by separately bringing and reacting the vapors on the exposed surface of the lithium carbonate film 97. The exposed surface and lateral face of the lithium carbonate film 97 are covered with the protective film 96.

After the protective film 96 made of the polyurea film is formed in a predetermined film thickness, the powers of the first and second heaters 23, 24 are turned off to terminate the vapor deposition polymerization reaction. The object to be processed 81 becomes the thin film lithium secondary battery 90 in Figs. 1(a) and (b) through the formation of the protective film 96 on the lithium carbonate film 97. The thin film lithium secondary battery 90 is taken out into the atmosphere from the second vacuum chamber 31.

In this embodiment, although the protective film 96 made of the polyurea film is formed by the vapor deposition polymerization reaction, a protective film 96 made of an Si02 film or an SiN film may be formed by a sputtering method. The protective film 96 may be any film, so long as it prevents moisture in the atmosphere from invading the films formed under the protective film 96.

Meanwhile, portions of the positive pole electrical power collector film 91 and the negative pole electrical power collector film 94 protrude and are exposed from the protective film 96, so that those portions can be connected to an external circuit.

## Claims

1. A process for producing a chargeable-and-dischargeable thin film lithium secondary battery, which comprises:
a substrate;
a positive electrode film arranged on the substrate and formed in a structure of which lithium is insertable and releasable,
an electrolyte film which is arranged on the positive electrode film and being in contact with the positive electrode film, and contains lithium ions and in which lithium ions are movable, and
a negative electrode film made of metallic lithium and arranged on the electrolyte film and being in contact with the electrolyte film,
the process, comprising the steps of:
after the negative electrode film is formed, forming a film of lithium carbonate on a surface of the negative electrode film by bringing a surface of the negative electrode film into contact with a surface-treating gas containing a diluent gas not reactable with metallic lithium and carbon dioxide without exposing the negative electrode film to the atmosphere.

2. The process for producing the thin film lithium secondary battery according to claim 1, wherein after the film of lithium carbonate is formed, the substrate is placed in a carrier box which is filled with one of the diluent gas and the surface-treating gas, and wherein the carrier box in this state is moved in the atmosphere.

3. The process for producing the thin film lithium secondary battery according to claim 1, wherein after the film of lithium carbonate is formed, a protective film is formed on the film of lithium carbonate.

4. The process for producing the thin film lithium secondary battery according to claim 1, wherein the carbon dioxide is contained in the surface-treating gas at a partial pressure of at least 0.01% and at most 4%.

5. A chargeable-and-dischargeable thin film lithium secondary battery, comprising:
a substrate;
a positive electrode film arranged on the substrate and formed in a structure of which lithium is insertable and releasable;
an electrolyte film which is arranged on the positive electrode film and in contact with the positive electrode film and contains lithium ions and in which lithium ions are movable; and
a negative electrode film made of metallic lithium and arranged on the electrolyte film and in contact with the electrolyte film,
wherein a film of lithium carbonate is arranged on the negative electrode film and in contact with the negative electrode film.

6. The thin film lithium secondary battery according to claim 5, wherein the film of lithium carbonate is formed on a surface and a lateral face of the negative electrode film.
